Europäisches Patentamt

European Patent Office

Office européen des brevets

(19)

(11) Veröffentlichungsnummer : **0 204 741**
**B1**

(12) **EUROPÄISCHE PATENTSCHRIFT**

(45) Veröffentlichungstag der Patentschrift :
24.01.90

(21) Anmeldenummer : 85905821.6

(22) Anmeldetag : 27.11.85

(86) Internationale Anmeldenummer :
PCT/EP 85/00648

(87) Internationale Veröffentlichungsnummer :
WO/8603314 (05.06.86 Gazette 86/12)

(51) Int. Cl.⁵ : **G 06 K   9/18**, G 06 K   7/015

(54) VERFAHREN UND ANORDNUNG ZUM KENNZEICHNEN UND ERKENNEN VON GEGENSTÄNDEN.

(30) Priorität : 27.11.84 DE 3443086
            22.02.85 DE 3506175

(43) Veröffentlichungstag der Anmeldung :
17.12.86 Patentblatt 86/51

(45) Bekanntmachung des Hinweises auf die Patenterteilung : 24.01.90 Patentblatt 90/04

(84) Benannte Vertragsstaaten :
AT BE CH DE FR GB IT LI LU NL SE

(56) Entgegenhaltungen :
EP--A-- 0 114 666
DE--A-- 1 574 681
DE--A-- 1 935 336
DE--A-- 2 422 944
DE--A-- 3 205 189
US--A-- 4 124 797
US--A-- 4 193 540
Electronic Engineering, Band 83, Nr 403, September
1961 G. Fougere et al.: "A Fast Numeral Reading
Machine ", Seiten 562-563

(73) Patentinhaber : Kappner, Helmut A.
Akazienweg 13
D-6720 Speyer/Rhein (DE)

(72) Erfinder : Kappner, Helmut A.
Akazienweg 13
D-6720 Speyer/Rhein (DE)

(74) Vertreter : Grussdorf, Jürgen, Dr. et al
Patentanwälte Zellentin & Partner Rubensstrasse 30
D-6700 Ludwigshafen (DE)

## Beschreibung

Die Erfindung betrifft Verfahren und eine Anordnung zum Kennzeichnen und Erkennen von Gegenständen, insbesondere Dokumenten, Werkstücken und Transportmitteln.

Auf verschiedenen Gebieten ist es erforderlich, zuvor gekennzeichnete Gegenstände zu erkennen. So werden beispielsweise Transportbehälter mit einer individualisierenden Kennzeichnung versehen, aus welcher u. a. der Eigentümer und der Zeitpunkt der Inbetriebnahme zu ersehen ist. In der Getränkeindustrie kann somit der Weg des Leergutes verfolgt werden.

Ferner wird in Industriebetrieben eine Erkennung und entsprechende Steuerung von Werkstücken benötigt. Derartige Tätigkeiten von Menschen durchführen zu lassen, ist häufig nicht sicher genug. Bei derart eintönigen Arbeiten läßt erfahrungsgemäß die Aufmerksamkeit der jeweiligen Person erheblich nach. Außerdem verursachen derartige Tätigkeiten durch Menschen erhebliche Kosten.

### Stand der Technik

Es sind daher bereits viele Verfahren und Einrichtungen zum Erkennen von Gegenständen bekannt geworden, die auf dem maschinellen Erkennen von Codierungen beruhen.

Darunter haben optische Abtastverfahren den Vorteil, den Abstand zwischen Leseeinheit und dem zu erkennenden Gegenstand variieren zu können.

Andererseits ergeben sich Probleme, wenn die Lage der Codierung in bezug auf den optischen Sensor nicht genau einer vorgegebenen Lage entspricht oder im rauhen industriellen Einsatz die Codierung durch mechanische Einwirkung oder Verschmutzung partiell verändert wird.

Aus diesen Gründen sind bis heute Klarschrift-Codierungen im industriellen Materialfluß wenig bekannt, mit Ausnahme von Lesegeräten zum Lesen von Postleitzahlen auf Briefen und Etiketten.

Die bekannten Korrelationsverfahren zur Zeichenerkennung sind zu empfindlich gegenüber Fehlpositionierungen, insbesondere Drehlagenunterschieden, sowie Beeinträchtigungen der Zeichenform, wie sie im Industriebetrieb nicht ausgeschlossen werden können.

Dazu kommt, daß die bekannten Methoden zur Klarschrifterfassung einen großen technischen Aufwand bedingen.

Deshalb kommen in industriellen Prozessen vorwiegend Barcodes zum Einsatz, wobei die Position der Codierung mit Hilfe der charakteristischen Abfolge der Striche gefunden werden kann und auch eine gewisse Toleranz gegenüber Beschädigungen vorhanden ist, oder es werden recht grobe Codierungen in Form von Löchern oder erhabenen Balken verwendet, welche jedoch vom Menschen nur schwer interpretierbar sind.

Die Verwendung von Orientierungszeichen ist in der Bildverarbeitung an sich bekannt. Bei bekannten Verfahren (DE 32 05 189 A1) sind jedoch spezielle Orientierungszeichen vorgesehen, welche auf Grund ihrer besonderen Form bei der Auswertung als solche erkannt werden. Dieser Vorgang kann jedoch durch Fehler der Orientierungszeichen, beispielsweise durch mechanische Beschädigungen, gestört sein, so daß die Orientierungszeichen nicht erkannt werden. Dieses stört den gesamten Erkennungsvorgang besonders, da die Erkennung der Orientierungszeichen am Anfang des gesamten Ablaufs steht. Bei dem erfindungsgemäßen Verfahren sind keine besonders gestalteten Orientierungszeichen erforderlich. Es können z. B. kleine Rechtecke, Balken oder kreisscheibenförmige Punkte oder andere geometrische Formen sein. Auch Ausbrüche, teilweise Abdeckungen oder Fehlstellen der Zeichen oder der Orientierungszeichen beeinträchtigen die Funktion des erfindungsgemäßen Verfahrens innerhalb weiter Toleranzen nicht.

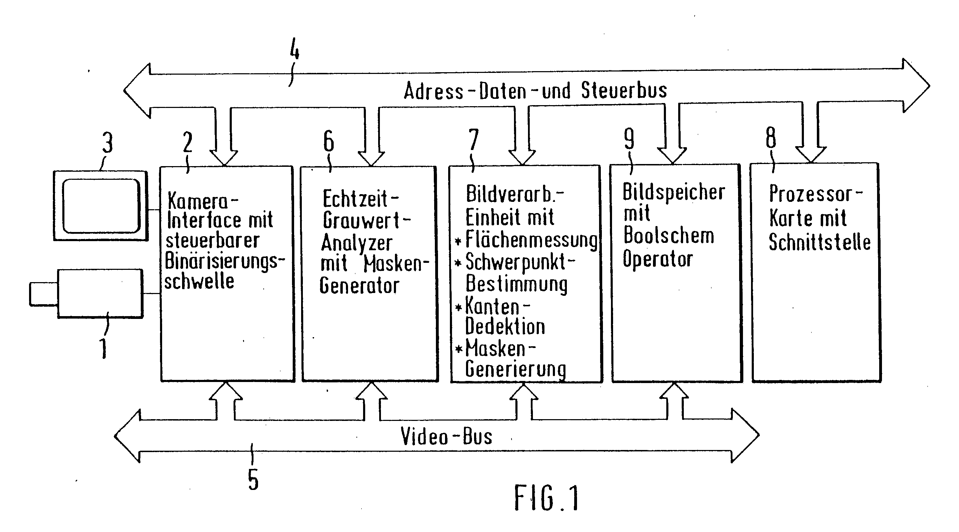

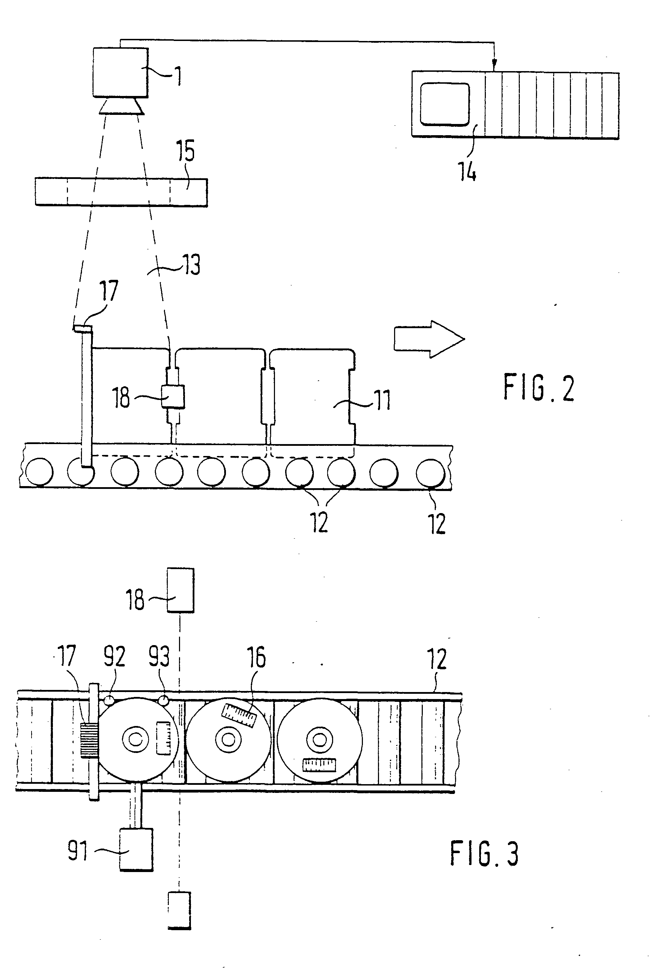

Aus der DE-A-15 74681 ist schon ein Verfahren zum Erkennen von Gegenständen bekannt, bei dem auf dem Gegenstand 12 eine dauerhafte Codierung AT, 34 angebracht ist (Seite 10, Zeilen 1-3 und Seite 13, Zeile 7), die aus segmentierten Zeichen 34 besteht, welche maschinenlesbar ist (Seite 13, Zeilen 6-8 sowie Figur 3a), auf dem Gegenstand 12 ferner ein Orientierungszeichen 32 angebracht ist, welches zur Codierung AT, 34 eine vorgegebene Lage aufweist (Seite 14, Zeilen 17-19 sowie Figur 3a), die Codierung 34 und das Orientierungszeichen 32 von einer elektronischen Kamera LK 33 aufgenommen wird, deren Ausgangssignale zu einem Bildverarbeitungsrechner 41 (in Figur 1) geleitet werden (Seiten 15, Zeilen 11-20), eine Abtastmaske 32 innerhalb des aufgenommenen Bildes die voraussichtliche Lage des Orientierungszeichens 32 einnimmt (Seite 14, Zeile 14 — Seite 15, Zeile 6), dasjenige Zeichen, welches sich in der Maske 37 befindet, als Orientierungszeichen 32 erkannt und dessen Lage bestimmt wird (a.a.O.), aus der Lage des Orientierungszeichens 32 die Lage der weiteren Masken 36 für die einzelnen Segmente der Codierung 34 folgt (a.a.O.) und aus der An- oder Abwesenheit der Segmente der Zeichen 34 innerhalb der weiteren Masken 36 eine Code- Information abgeleitet wird (Seite 15, Zeilen 7-20).

Damit ist ein Verfahren bekannt, bei dem ein nicht-lesegerecht vor dem Lesekopf plazierter Aufzeichnungsträger über eine Steuerungseinrichtung eine mechanische oder elektrische Verschiebung oder Drehung von Aufzeichnungsträger oder Lesekopf bewirkt, bis beide sich in lesegerechter Stellung befinden. Zu diesem Zweck wird ein radialsymmetrisches Orientierungszeichen (Kreisscheibe oder Kreisring) so lange verschoben, bis eine in 4 Sektoren unterteilte Abbildung des Zeichens in jedem Sektor die gleiche Intensität besitzt und diese mit einer Eichgröße übereinstimmt. Danach wird eine zusätzlich angebrachte Erkennungsmarkierung abgelesen. Beschädigungen und Verschmutzungen der Orientierungszeichen machen dieses Verfahren unbrauchbar, da die Justierung nicht mehr richtig arbeitet. Zusätzlich ist der Steuerungs- und Justieraufwand erheblich.

Ein ähnliches, jedoch noch aufwendigeres Verfahren ist in der US-P-4,124,797 beschrieben, wo zwei unterschiedliche Orientierungszeichen zunächst aufgrund ihrer speziellen Form aufgesucht werden müssen, woraufhin das Bild gedreht wird bis die Orientierungszeichen bezüglich des Sensors eine definierte Position einnehmen und die zwischen ihnen befindliche Information lesegerecht abgelesen werden kann. Um aus jeder Richtung erkennbar zu sein, müssen auch hier die Orientierungszeichen zentrosymmetrisch sein und sich significant von den abzulesenden Symbolen und eventuellen sonstigen Markierungen oder Oberflächenfehlern unterscheiden.

In der Entgegenhaltung ist daher ein großes und kleines « bull's eye », d. h. ein großer bzw. kleiner Kreisring mit markiertem Zentrum beschrieben. Beschädigungen der Orientierungszeichen und Verunreinigungen auf diesen machen das Verfahren unbrauchbar, da die Maschine sie dann nicht mehr als solche erkennt und die notwendige Justierung nicht durchführen kann.

Ebenfalls aus der DE-A-15 74681 ist schon eine Anordnung zur Kennzeichnung von Gegenständen bekannt, gemäß der auf dem Gegenstand 12 eine dauerhafte Codierung 40 angebracht ist, die aus segmentierten Klarschrittzeichen 42 besteht, welche sowohl menschen- als auch maschinenlesbar sind, und gemäß der auf den Gegenstand 12 ferner ein Orientierungszeichen 41 angebracht ist, welches zur Codierung 40 eine vorgegebene Lage aufweist (vgl. Seite 10, Zeilen 1-3, Seite 16, Zeilen 8-16 sowie Figur 3b).

Darstellung der Erfindung

Das erfindungsgemäße Verfahren hat den Vorteil, daß eine sowohl menschen- als auch maschinenlesbare Codierung mit einer geringen Fehlerrate erkannt wird und daß Abweichungen der Lage der Codierung sowie beliebige Drehlagen mit verhältnismäßig geringem technischen Aufwand erfaßt werden und damit den Erkennungsvorgang nicht beeinträchtigen. Weiter bietet es den Vorteil, daß die Codezeichen und Orientierungszeichen auch bei teilweiser Beschädigung noch sicher gelesen werden können.

Insbesondere können nunmehr vom Menschen leicht lesbare Klarschriftzeichen auch dauerhaft auf Werkstücke und Behälter, usw. aufgebracht werden, indem die Eigenschaft der segmentierten Darstellung ausgenutzt wird, wie in den Ansprüchen dargelegt, und diese Zeichen nach dem erfindungsgemäßen Verfahren zugleich maschinell gelesen werden.

Auf dem Gebiet der Bildverarbeitung wird im allgemeinen unter dem Begriff « Maske » ein Bildausschnitt verstanden, welcher zur Selektion von relevanten und nichtrelevanten Teilen des Bildes dient. Eine Maske kann verschiedene Formen einnehmen und unter anderem kreisscheibenförmig oder rechteckförmig sein. Bei der Auswertung von Signalen in Echtzeit, welche mittels einer Videokamera erzeugt werden, wird eine Maske beispielsweise durch Impulse dargestellt, welche innerhalb vorgegebener Zeilen jeweils für einen vorgegebenen Teil der Zeile auftreten. Derartige Impulse werden zusammen mit dem in ein Binärsignal umgewandelten Videosignal einer Koinzidenzschaltung zugeführt. Am Ausgang der Koinzidenzschaltung stehen dann nur diejenigen Signale zur Verfügung, welche den in der Maske befindlichen Teilen des zu erkennenden Zeichens entsprechen.

Bei der Durchführung von entsprechenden Verfahren mit Hilfe der Computertechnik wird man zweckmäßigerweise innerhalb eines zuvor abgespeicherten Kamerabildes den einzelnen Bildelementen (Bildpunkten, Pixels) Adressen zuordnen und nur bei denjenigen Adressen den Bildinhalt auf das Vorhandensein von Zeichen überprüfen, welche als Maske gespeichert sind. Dabei ist es für den gewünschten Effekt im allgemeinen unerheblich, ob jede einzelne zu einer Maske gehörende Adresse oder lediglich einige Werte sowie ein dazugehöriger mathematischer Algorithmus gespeichert wird. So können beispielsweise für eine rechteckförmige Maske die Eckpunkte gespeichert werden und bei der Anwendung der Maske nur Punkte überprüft werden, deren Koordinaten zwischen den Eckpunkten liegen oder bei einer kreisscheibenförmigen Maske werden der Mittelpunkt und der Radius gespeichert.

So ist es beispielsweise mit dem erfindungsgemäßen Verfahren möglich, mit an sich üblichen Transportmitteln, wie beispielsweise Rollenbahnen und Kreisförderern, die Gegenstände an die Einrichtung zum Erkennen heranzuführen und trotz der Ungenauigkeiten dieser Einrichtungen die Gegenstände mit geringer Fehlerrate zu erkennen.

Eine Weiterbildung des erfindungsgemäßen Verfahrens besteht darin, daß zur Erkennung von rotationssymmetrischen Gegenständen vor der Erzeugung der Masken für die Orientierungszeichen eine erste Maske für den auf dem Gegenstand gekennzeichneten Mittelpunkt und eine zweite Maske für ein Drehlagenzeichen des Gegenstandes erzeugt werden. Die erste Maske wird dann erforderlich, wenn der Gegenstand große Lagetoleranzen aufweist. Ist die Drehlage der rotationssymmetrischen Gegenstände bei der Zuführung zur Erkennungseinrichtung unbestimmt, so wird in vorteilhafter Weise die zweite Maske kreisringförmig sein. Bei einer annähernden Vorgabe der Drehlage kann jedoch auch eine die voraussichtliche Lage des Drehlagenzeichens umfassende rechteck- oder kreisscheibenförmige Maske erzeugt werden.

Das erfindungsgemäße Verfahren kann besonders vorteilhaft zur Erfassung von Kegs und Fässern bei Betrieben der Getränkeindustrie, insbesondere bei Brauereien, angewendet werden. Dabei erhält jedes Keg eine vom Menschen lesbare Codierung, die u. a. eine Nummer für den Abfüllbetrieb und das Keg selbst enthält. Im Abfüllbetrieb kann dann bei Verwendung des erfindungsgemäßen Verfahrens über eine Datenverarbeitungsanlage bei Ein- und Ausgang der Kegs eine Zuordnung der Ziel- bzw. Ursprungsadresse erfolgen, so daß Keg-Verluste einzelnen Kunden zugeordnet werden können. Weiterhin können beim Eingang der Kegs diejenigen ausgesondert werden, die einer Sicherheitsprüfung unterzogen werden müssen.

Es sind zwar Verfahren zur Codierung von Kegs und Fässern bekannt, die einen Lochcode am Umfang des Standringes des Kegs oder auf einem Metall-Etikett auf der Oberseite des Kegs verwenden, der von optischen Sensoren gelesen wird. Der Nachteil dieses Verfahrens ist, daß das Keg zum Lesen gedreht werden muß bzw. der Code nicht menschenlesbar ist.

Gemäß einer anderen Weiterbildung der Erfindung wird vor der Erzeugung der Masken für die Orientierungszeichen der Flächenschwerpunkt des die Codierung umfassenden Codefeldes ermittelt und unter Zuhilfenahme der Koordinaten des Flächenschwepunkts die Koordinaten der Maske für die Orientierungszeichen errechnet wird. Diese Weiterbildung ist in denjenigen Fällen anwendbar, bei welchen außer der Codierung und den Orientierungszeichen keine anderen optischen Zeichen zum Auffinden des Codefeldes auf den Gegenstanden angebracht und sichtbar sind. Der Flächenschwerpunkt wird dabei je nach der statistischen Verteilung der Einzelzeichen geringfügig variieren. Diese Variation liegt jedoch innerhalb von Toleranzen, die kleiner sind als der Spielraum zwischen den Orientierungszeichen und den Masken für die Orientierungszeichen. Dadurch bleibt eine anschließende Erfassung der Orientierungszeichen möglich.

Bei dem erfindungsgemäßen Verfahren wird davon ausgegangen, daß eine Transporteinrichtung die Gegenstände zwar nicht so genau an die Erkennungseinrichtung heranführt, daß ein Erkennen der Codierung möglich ist, jedoch genau genug, damit die Orientierungszeichen innerhalb vorgegebener Masken zu liegen kommen.

Eine andere Weiterbildung des erfindungsgemäßen Verfahrens besteht darin, daß nach der Ermittlung des Flächenschwerpunktes eine kreisringförmige Maske für die Orientierungszeichen erzeugt wird, wobei der Mittelpunkt der Maske durch den Flächenschwerpunkt gebildet wird. Damit wird eine Erfassung der Orientierungszeichen und damit des Codefeldes sowie der Lage der einzelnen Codezeichen auch dann ermöglicht, wenn die Drehlage des Codefeldes nicht vorher festgelegt ist.

Eine besondere Ausgestaltung dieser Weiterbildung ist dadurch gekennzeichnet, daß mehrere Orientierungszeichen mit unterschiedlichen Abstanden vom Flächenschwerpunkt angeordnet sind und daß mehrere Masken für die Orientierungszeichen mit unterschiedlichen Abständen vom Flächenschwerpunkt erzeugt werden, wobei mindestens die erste Maske kreisringförmig und konzentrisch zum Flächenschwerpunkt ist.

Durch die in den weiteren Unteransprüchen aufgeführten Maßnahmen sind weitere vorteilhafte Weiterbildungen und Verbesserungen des im Hauptanspruch angegebenen Verfahrens möglich.

Ferner ist ein Anspruch für eine Anordnung zur Kennzeichnung von Gegenständen zur Verwendung in einem erfindungsgemäßen Verfahren angegeben.

Kurze Beschreibung der Figuren

Ausführungsbeispiele der Erfindung sind in der Zeichnung an Hand mehrerer Figuren dargestellt und in der nachfolgenden Beschreibung näher erläutert.

Es zeigt. :

Fig. 1 eine Anordnung zur Durchführung des erfindungsgemäßen Verfahrens,

Fig. 2 und Fig. 3 eine Anordnung zur Erkennung von Kegs,

Fig. 4 die Oberseite eines Kegs mit einer erfindungsgemäßen Codierung,

Fig. 5 eine erfindungsgemäße Codierung,

Fig. 6 eine schematische Darstellung der Abtastung eines Zeichens mit einer Maske,

Fig. 7 numerische Schriftzeichen zur Verwendung beim erfindungsgemäßen Verfahren,

Fig. 8 eine radial und exzentrische angeordnete Codierung für zylindrische Gegenstände,

Fig. 9 ein zentrisch angeordnetes Codierfeld mit Orientierungszeichen für zylindrische Gegenstände,

Fig. 10 eine exzentrische Anordnung eines Codierfeldes mit Orientierungszeichen für zylindrische Gegenstände mit zwei möglichen Positionen für Drehlage-Orientierung,

Fig. 11 und Fig. 12 eine Einrichtung zur Erkennung von Flaschen,

Fig. 13 und Fig. 14 eine Anordnung von Code-Zeichen mit erhabener Aufbringung der Zeichen,

Fig. 15 und Fig. 16 eine Einrichtung zur Erkennung von Flaschenkästen,

Fig. 17, Fig. 18 und Fig. 19 Anordnungen von Codierungen auf Kegs,

Fig. 20, Fig. 21 und Fig. 22 verschiedene Codierungen, die bei dem erfindungsgemäßen Verfahren verwendet werden können, und

Fig. 23 eine Plakette mit einer Codierung, Orientierungszeichen und einem weiteren Orientierungszeichen.

Gleiche Teile sind in den Figuren mit gleichen Bezugszeichen versehen.

Beschreibung von Ausführungsbeispielen

Fig. 1 zeigt ein Blockschaltbild einer Anordnung zur Durchführung des erfindungsgemäßen Verfahrens. Dabei nimmt eine elektronische Kamera 1 das Bild des zu erkennenden Gegenstandes bzw. der interessierenden Teile davon auf. Die Kamera 1 kann eine herkömmliche Videokamera mit einer Aufnahmeröhre oder mit einem Halbleiter-Flächensensor oder auch eine sogenannte Zeilenkamera sein. Die Ausgangssignale der Kamera 1 werden zu einem Kamerainterface 2 geleitet, welches die Videosignale zur weiteren Bearbeitung vorbereitet. Diese erfolgt in erster Linie durch eine Binärisierung der Videosignale, um aus der Vielzahl der von der Kamera aufgenommenen Grauwerte ein binäres Signal zu erhalten, welches nur zwei Zustände einnehmen kann in Abhängigkeit vom Vorliegen von zu erkennenden Zeichen. Die bei der Binärisierung verwendete Schwelle ist je nach Kontrast des aufgenommenen Bildes einstellbar. Diese Techniken sind an sich bekannt und brauchen im Zusammenhang mit der vorliegenden Erfindung nicht näher erläutert zu werden. Auch die Wiedergabe des Videosignals oder des binären Videosignals mit Hilfe eines Monitors 3 ist bekannt sowie die überlagerte Darstellung beider Signale.

Das Kamerainterface 2 ist nun einerseits über einen Adreß-, Daten- und Steuerbus 4 und andererseits über einen Videobus 5 mit anderen Baugruppen der Anordnung nach Fig. 1 verbunden. Dabei enthält die Baugruppe 6 einen Echtzeit-Grauwert-Analyzer mit Maskengenerator. Mit Hilfe dieser Baugruppe wird der Grauwert der mit Hilfe der Kamera 1 abgetasteten speziellen Grauwertbestimmungszeichen ermittelt und die Binärisierungsschwelle sowie gegebenenfalls eine Belichtungsautomatik der Kamera i entsprechend gesteuert. Ein in der Baugruppe 6 enthaltener Maskengenerator erzeugt eine Maske, mit welcher man von vornherein die Auswertung auf einstellbare Bildbereiche begrenzen kann. Derartige Schaltungen und Verfahren sind ebenfalls grundsätzlich bekannt und brauchen im Zusammenhang mit der Erfindung nicht näher erläutert zu werden.

Die nächste Baugruppe 7 umfaßt eine Bildverarbeitungseinheit mit verschiedenen Aufgaben. So können mit der Bildverarbeitungseinheit 7 Flächenmessungen, Schwerpunktsbestimmungen und Kantendetektionen vorgenommen sowie Masken erzeugt werden.

Eine Prozessor-Baugruppe enthält einen Mikroprozessor und Programmspeicher zur Steuerung des Verfahrensablaufs.

Verschiedene Bildverarbeitungsschritte lassen sich günstiger durchführen, wenn das aufzunehmende Bild über mehrere Bildperioden zur Verfügung steht. Dieses kann einerseits dadurch sichergestellt werden, daß der zu erkennende Gegenstand entsprechend lange vor der Kamera i festgehalten wird oder — falls dieses nicht möglich oder nicht sinnvoll ist — das einmal aufgenommene Bild in einem Bildspeicher 9 abgelegt wird.

Fig. 2 stellt schematisch eine Anordnung zum Erkennen von Kegs 11 dar, welche auf einer Rollenbahn 12 durch das Sichtfeld 13 einer Kamera 1 durchgeführt werden. Fig. 3 stellt die gleiche Anordnung als Draufsicht dar. Die Kamera 1 ist an einen Bildverarbeitungsrechner 14, wie in Fig. 1 dargestellt wurde, angeschlossen. Eine ringförmige Leuchte 15 beleuchtet das Sichtfeld 13 der Kamera 1. Auf der oberen Fläche der Kegs 11 sind Codierungen 16 angebracht, welche mit Hilfe der Kamera 1 und des Bildverarbeitungsrechners 14 gelesen werden. Eine Lichtschranke 18 löst das kurzzeitige Festhalten des Kegs in einer Dreipunkt-Positioniereinheit, bestehend aus einem beweglichen Anpreß-Zylinder 91 und zwei feststehenden Rollen-Widerlagern 92, 93, und damit den Start des Ablaufs des Erkennungsverfahrens aus. Eine fest angeordnete Grauwertskala 17 oder eine einheitlich eingefärbte Grauwertfläche kann vom Bildverarbeitungsrechner ebenfalls ausgewertet werden, um bei der Bewertung der Codierung 16 ein Bezugsnormal für die Beleuchtungsstärke zu haben.

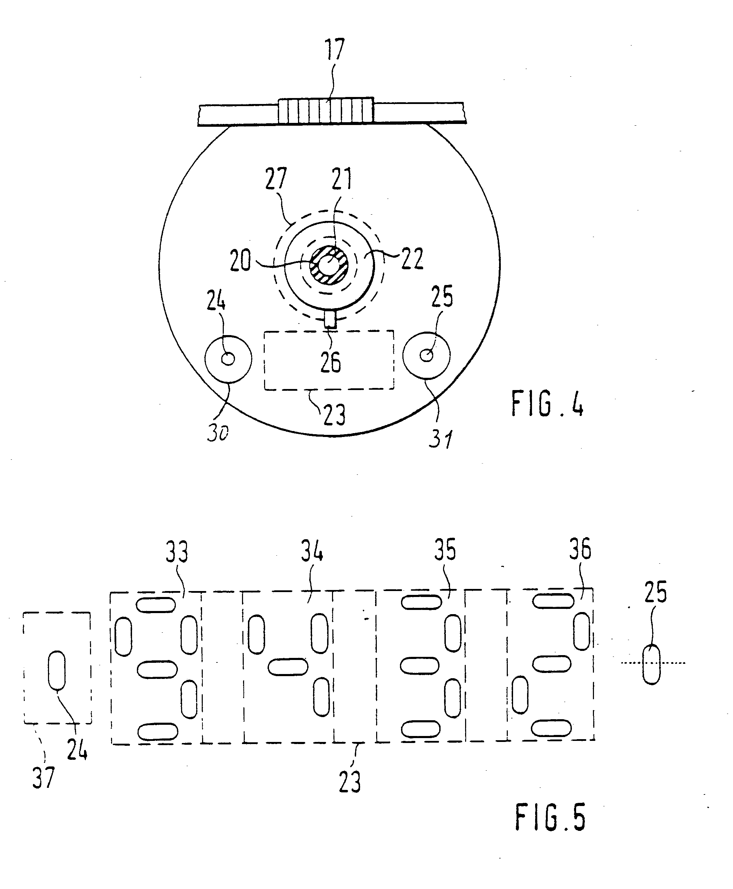

Fig. 4 zeigt eine vergrößerte Darstellung der Kegoberseite sowie der Grauwertskala 17. Mit Hilfe der Rollenbahn 12 und der Positioniereinheit 91, 92, 93 erfolgt eine derart genaue Positionierung des Kegs, daß der Mittelpunkt des Kegs 21 lediglich um einige Millimeter von der Soll-Lage abweicht.

Gegebenenfalls kann zu einer noch genaueren Mittelpunktbestimmung vor der Auswertung der Orientierungszeichen auch das Bild des Edelstahl-Fittings zu einer ersten Lageerkennung herangezogen werden, indem das schwarze Ventilgummi 20 als Orientierungszeichen benutzt wird oder — bei Verwendung einer Abdeckhaube auf dem Fitting — eine ähnliche Markierung oder ein Punkt mittig auf der Abdeckhaube angebracht werden, und diese zu einer ersten Lageerkennung herangezogen werden. Innerhalb des Bildverarbeitungsrechners wird hierzu eine kreisscheibenförmige Maske erzeugt, welche konzentrisch zur Soll-Lage des Kegmittelpunktes 21 ist.

Der Radius der Maske ist größer als der äußere Durchmesser des schwarzen Ventilgummis bzw. der Markierung auf der Abdeckhaube, jedoch kleiner als der Durchmesser des Fittings 22. Dadurch ist sichergestellt, daß in der Maske nur das Ventilgummi bzw. die Markierung als dunkler Bereich vor der ansonsten hellen Oberfläche des Fittings bzw. der Schutzkappe erscheint. Eine Berechnung des Schwerpunktes des dunklen Bereiches ergibt die exakte Lage des Keg-Mittelpunktes.

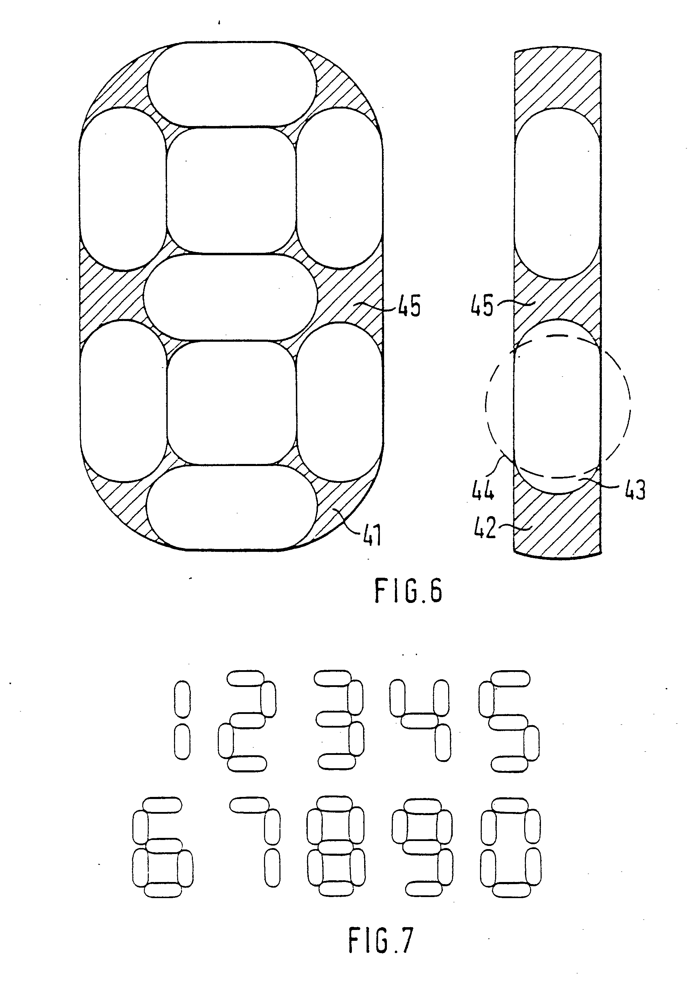

Zur Erkennung des Kegs ist auf dessen Oberseite ein Codierfeld 23 angeordnet, welches eine in Zusammenhang mit Fig. 5 näher erläuterte Codierung trägt. Neben dem Codierfeld 23 sind zwei Orientierungszeichen 24, 25 angeordnet. Ein weiteres Orientierungszeichen 26 ist zwischen dem Keg-Mittelpunkt und dem Codierfeld 23 angeordnet. Die Zeichen können hell vor dunklem Hintergrund oder dunkel vor hellem Hintergrund ausgeführt sein.

Da die Kegs bezüglich ihrer Drehlage nicht festgelegt sind, wird zunächst die Drehlage ermittelt. Dazu wird eine kreisringförmige Maske 27 erzeugt. Bildteile, welche innerhalb der Maske 27 liegen, werden als Drehlagen-Orientierungszeichen 26 erkannt, wenn sie eine Reihe von zusammenhängenden Pixeln aufweisen, die zum Untergrund kontrastieren, und deren Anzahl der Breite des Drehlagen-Orientierungszeichens entspricht.

Für die Drehlagen-Erkennung selbst kann z. B. ein stellenbewertendes Verfahren wie folgt verwendet werden.

Hierbei wird die Winkellage jedes Kreispixels in eine Tabelle abgelegt, beginnend mit dem ersten Pixel und endend mit dem letzten Pixel des Vollkreises. Dann werden die Pixel des Kreises nacheinander abgetastet. Wird die obengenannte Pixelreihe erfaßt, dann wird das mittlere oder die beiden mittleren dieser Pixel aus der Reihe als kennzeichnend für die Drehlage bewertet, indem die zugehörige Winkellage aus der Tabelle ausgelesen wird. Die Genauigkeit der Drehlagen-Erkennung ist jedoch aufgrund vorhandener Toleranzen beschränkt.

Nachdem jedoch die Drehlage und der Mittelpunkt des Kegs zumindest ungefähr feststeht, wird in dem Bildverarbeitungsrechner 14 die vermutete Lage der Orientierungszeichen 24 und 25 errechnet. Um jedoch die genaue Lage zu ermitteln, werden um die vermuteten Positionen zwei Masken 30, 31 erzeugt, deren Durchmesser genügend groß ist, um Ungenauigkeiten bei den bisherigen Verfahrensschritten ausgleichen zu können. Die Masken 30 und 31 sollten jedoch auch nicht zu groß sein, damit beispielsweise das Codierfeld 23 bei entsprechenden Drehlagen nicht in die Maske fällt und somit zu einer Fehlmessung führt. In der Praxis hat sich ein Radius der Maske 30 bzw. 31 bewährt, welcher der Hälfte des Abstandes zwischen dem Mittelpunkt des Orientierungszeichens 24, 25 und dem Codierfeld 23 entspricht.

Anschließend wird der Flächenschwerpunkt der Orientierungszeichen 24 und 25 gemäß bekannten Verfahren der Bildverarbeitung ermittelt. Da die Orientierungszeichen 24 und 25 eine vorbestimmte Lage gegenüber dem Codierfeld 23 aufweisen, ist somit auch die exakte Lage des Codierfeldes 23 festgestellt.

Die weiteren Verfahrensschritte werden unter Bezugnahme auf Fig. 5 erläutert. Das Codierfeld 23 umfaßt z. B. vier Schriftzeichen 33, 34, 35, 36, welche mit Hilfe einer Auswahl aus sieben Segmenten dargestellt sind. Dadurch sind die Schriftzeichen sowohl menschenlesbar als auch für eine sichere Erkennung durch den Bildverarbeitungsrechner ausgelegt. Gegenüber der Darstellung in Fig. 4 sind in Fig. 5 die Orientierungszeichen 24, 25 länglich und somit an die Art der Segmente der Schriftzeichen angepaßt. Mit einer rechteckförmigen Maske 37 ist angedeutet, daß anstelle der runden Maske nach Fig. 4 auch rechteckige verwendet werden können. Mit Hilfe weiterer Masken, welche nacheinander an den Positionen der vorhandenen und nichtvorhandenen Segmente erzeugt werden, wird festgestellt, welche Segmente vorhanden sind. Die somit erhaltene Information wird schließlich zu Signalen, die in an sich bekannter Weise Schriftzeichen kennzeichnen, beispielsweise nach dem ASCII-Code, umgewandelt.

Die im Zusammenhang mit den Figuren 2 bis 5 beschriebenen Verfahrensschritte sind als Programm im Bildverarbeitungsrechner 14 abgelegt. Dieses Programm kann je nach verwendeten Rechnern und weiteren Einzelheiten im Rahmen des Fachmännischen unterschiedlich gestaltet sein. Deshalb sind bei der folgenden Aufzählung die wichtigsten Programmschritte verbal wiedergegeben.

Warten auf ein Lichtschrankensignal zur Registrierung der Anwesenheit des jeweils nächsten Kegs in der Station. Das Anwendungsbeispiel bezieht sich auf ein Code-Feld mit einer 10-ziffrigen Siebensegmentzahl.

Bildaufnahme und Maskenbildung für die Grauwertanalyse in einer konstanten Abtastmaske; die Maske umschließt eine Grauwertreferenzfläche die am Rande des Bildfeldes fest installiert ist.

Grauwertsummenbildung und Adaption der Binarisierungsschwelle an die gemessene Grauwertsumme zum Ausgleich von Beleuchtungsschwankungen.

Bildaufnahme mit Echtzeit-Speicherung des Binärbildes.

Erfassung der Drehlage (Groberkennung) an Hand des Drehlagen-Orientierungszeichens (26).

Berechnung der vermuteten Mittelpunkte M1', M2' der Fein-Orientierungszeichen (24, 25).

Bestimmung des Flächenschwerpunktes innerhalb zweier als Kreisscheiben mit Mittelpunkten M', M2' und mit einem Radius r ausgebildeten Masken, wobei r etwa der halben Distanz zwischen dem Mittelpunkt der Fein-Orientierungszeichen und dem Codefeld entspricht. Die erhaltenen Flächenschwerpunkte entsprechen den tatsächlichen Mittelpunkten M1, M2 der Fein-Orientierungszeichen (24, 25).

Errechnung der Segment-Mittelpunkte MS der 70 Segmente aus der Lageinformation von M1 und M2 mittels Koordinatentransformation.

Schnelle Abtastung der Segmente mittels Kreisscheibenmaske mit Durchmesser D und Mittelpunkt MS, wobei D etwa der anderthalbfachen Breite eines Segmentes entspricht (überlappende Abtastung).

Bildung der Pixelsumme innerhalb jeder Kreisscheibenmaske. (Die Pixeladressen der Kreisscheibenmasken werden durch Indizierung der Mittelpunktadresse des jeweiligen Segmentes mit einer fest abgespeicherten Kreisscheibentabelle gewonnen).

Abspeicherung aller Pixelsummen $S_{i, j}$, wobei i = Index für die Ziffer i (i = 1...10), j = Index für die Segment-Nr (j = 1...7).

Bildung von 10 Flag-Bytes $FB_i$ mit jeweils 7 signifikanten Bits j, wobei:

Bit j des Bytes i ist gleich 1 falls $S_{i, j}$ größer $S_g$
Bit j des Bytes i ist gleich 0 falls $S_{i, j}$ kleiner/gleich $S_g$,
wobei $S_g$ einem Grenzwert für die Pixelsumme $S_{i, j}$ in der Größenordnung etwa eines Viertels der Pixelsumme einer Segmentfläche entspricht.

Bit 8 des Bytes i ist stets 0.

Vergleich der erhaltenen Flag-Bytes mit 10 Referenz-Bytes für die Ziffern Z0...Z9. Bei positivem Vergleich wird aus der Referenzliste das zugeordnete ASCII-Zeichen entnommen und in eine Ausgabetabelle geschrieben in der Reihen-

folge Z0...Z9.

Ausgabe der ASCII-Zeichen über eine serielle Schnittstelle.

In Fig. 6 sind zwei Schriftzeichen 41, 42 dargestellt, wobei ein Segment 43 des Schriftzeichens 42 mit einer Maske 44 abgetastet wird. Die Maske 44 ist kreisscheibenförmig und überdeckt den wesentlichen Teil des Segments 43. Durch die im obenaufgeführten Programm durchgeführte Bildung der Pixelsumme und die Prüfung, ob die Pixelsumme über einem vorgegebenen Grenzwert liegt, werden Ungenauigkeiten bezüglich der Lage der Maske 44 zum Segment 43 oder des Segments 43 selbst (zu breit oder zu schmal) ausgeglichen.

In Fig. 6 ist ferner dargestellt, daß zur besseren Lesbarkeit der Zeichen durch den Menschen die ein Zeichen bildenden Segmente auch untereinander verbunden bzw. zu vollständigen Zeichen ergänzt werden können. Die in Fig. 6 schraffiert dargestellten Flächen 45 werden bei der Auswertung durch den Bildverarbeitungsrechner 14 nicht erfaßt.

In Fig. 7 sind der Vollständigkeit halber alle zehn numerischen Schriftzeichen dargestellt.

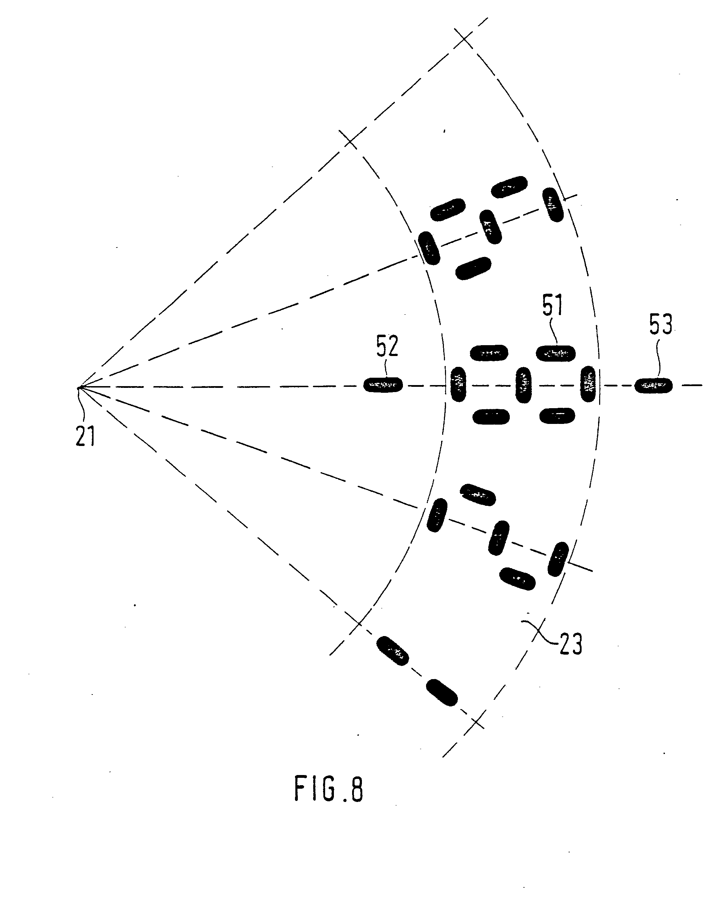

Sollte es aus fertigungstechnischen oder anderen Gründen günstiger sein, kann das Codierfeld auch kreisringförmig ausgestaltet sein, wie es in Fig. 8 dargestellt ist. Dabei können einem Zeichen 51 Orientierungszeichen 52, 53 zugeordnet sein.

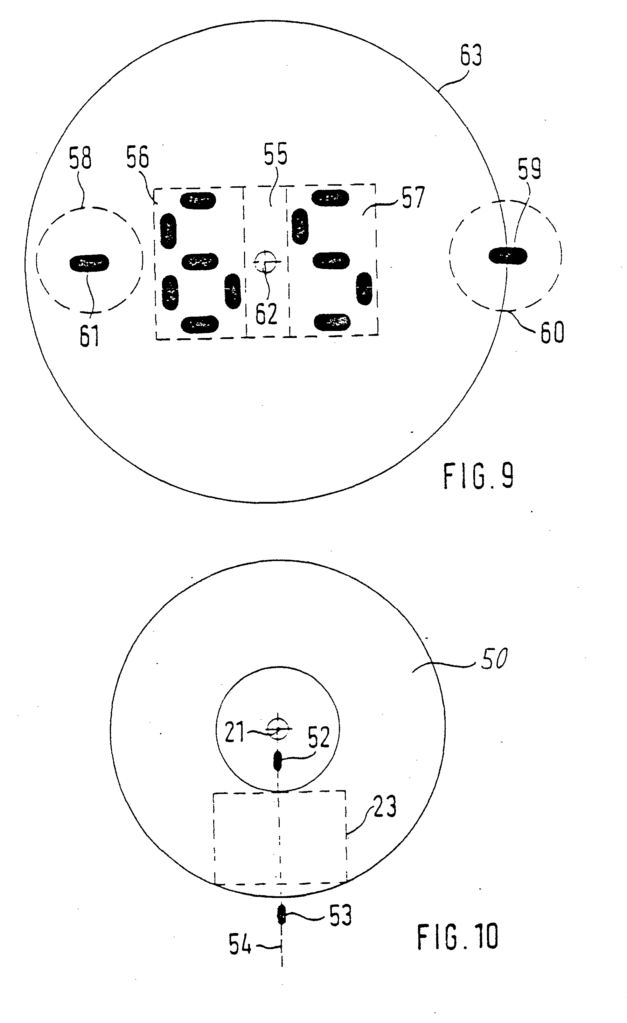

Bei derjenigen Ausgestaltung des erfindungsgemäßen Verfahrens, welche im Zusammenhang mit den Figuren 2 bis 5 erläutert wurde, kann der Mittelpunkt des Kegs mit relativ hoher Genauigkeit innerhalb des Sichtfeldes der Kamera positioniert werden. Sollte sich bei einer Anwendung des erfindungsgemäßen Verfahrens ein solcher Punkt nicht ergeben, so kann eine andere Ausführungsform des Verfahrens angewendet werden, welche im Zusammenhang mit Fig. 9 näher erläutert wird. Dabei wird vorausgesetzt, daß der zu erkennende Gegenstand derart in das Gesichtsfeld der Kamera gebracht werden kann, daß außer den in Fig. 9 dargestellten Zeichen keine weiteren Zeichen im Kamerabild erscheinen.

Ein Codierfeld 55 enthält beispielsweise zwei Schriftzeichen 56 und 57. Ferner sind zwei Orientierungszeichen 59 und 61 vorgesehen. Nachdem der Gegenstand in das Blickfeld der Kamera gebracht ist, wird vom Bildverarbeitungsrechner unter Berücksichtigung aller in Fig. 9 dargestellten Zeichen der ungefähre Flächenschwerpunkt 62 ermittelt. Um diesen Punkt wird eine kreisringförmige Maske 63 erzeugt, deren mittlerer Radius dem Abstand zwischen dem Flächenschwerpunkt und der Mitte des Orientierungszeichens 59 entspricht. Somit kann die Position des Orientierungszeichens 59 und damit auch die ungefähre Drehlage des Codierfeldes 55 festgestellt werden. Durch weitere, z. B. kreisscheibenförmige Masken 58, 60, kann die genaue Lage der Orientierungszeichen 59 und 61 bestimmt werden, woraus dann wiederum auf die genaue Lage des Codierfeldes 55 und der Schriftzeichen 56 und 57 geschlossen werden kann.

Sollte die Drehlage jedoch ungefähr bekannt sein, so können nach der Ermittlung des Flächenschwerpunktes 62 auch Masken für die Orientierungszeichen, wie im Zusammenhang mit Fig. 4 beschrieben, ermittelt werden.

Fig. 10 stellt eine Alternative zur Anordnung der Orientierungszeichen nach Fig. 4 dar. Das Codierfeld 23 ist wie bei Fig. 4 auf einem gedachten Kreisring 50 um die Rotationsachse 21 des Werkstücks oder Transportmittels angeordnet. Die Orientierungszeichen 52 und 53 sind auf demselben Radius 54 angeordnet und dienen sowohl als Drehlagen-Orientierungszeichen als auch zur Ermittlung der genauen Lage des Codierfeldes 23.

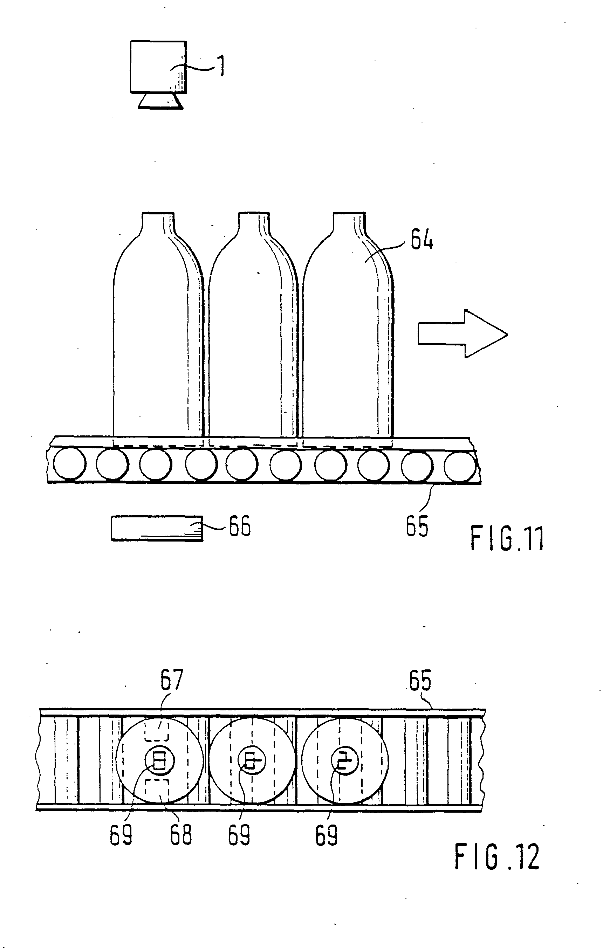

Im Zusammenhang mit den Figuren 11 und 12 wird eine weitere Anordnung des erfindungsgemäßen Verfahrens erläutert. Dabei sollen Zeichen 69, welche in Flaschenböden eingeprägt sind, erkannt werden. Dazu werden die Flaschen 64 auf einer Rollenbahn 65 durch das Sichtfeld der Kamera i geführt. Eine Beleuchtungseinrichtung 66 beleuchtet die Flaschen von unten. Die Beleuchtungseinrichtung 66 kann blitzartig arbeiten, was bei kontinuierlicher Bewegung der Flaschen 64 zu einem Bild beiträgt, welches frei von Bewegungsunschärfen ist. Zur Auswertung kann das entsprechende Bildsignal wie im Zusammenhang mit Fig. 1 beschrieben, gespeichert werden. Die Rollen 67 und 68 der Rollenbahn 65 geben einen Durchtritt für das Licht frei. Der Erkennungsvorgang kann so ablaufen, wie es im Zusammenhang mit Fig. 9 beschrieben wurde.

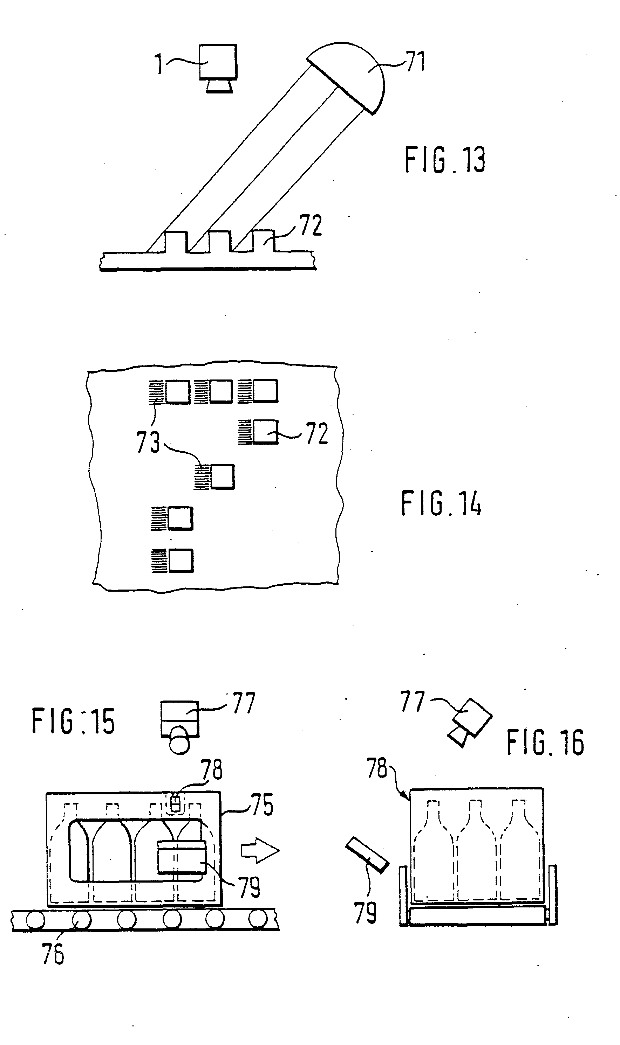

Bei Gegenständen, die einer rauhen Behandlung ausgesetzt sind, sind spezielle Vorkehrungen zu treffen, damit die Codierung dauerhaft ist und einen genügend großen Kontrast aufweist. Häufig sind deshalb bedruckte Aufkleber nicht geeignet. Eine Möglichkeit für eine dauerhafte Codierung ist in den Figuren 13 und 14 dargestellt. Dabei sind die Segmente der Schriftzeichen durch eine erhabene Ausbildung der Oberfläche des Gegenstandes dargestellt. Derartige erhabene Markierungen können bei aus Kunststoff gespritzten Gegenständen leicht hergestellt werden. Die Lichtquelle 71 ist derart angeordnet, daß die erhabenen Zeichen 72 Schatten 73 werfen, so daß zwischen den beleuchteten Flächen, die nicht von angrenzenden Segmenten gegenüber der Lichtquelle abgeschattet werden, und den von anwesenden Segmenten beschatteten Flächen ein ausreichender Kontrast entsteht.

Eine weitere Möglichkeit zur Gewährleistung eines hohen Kontrasts besteht darin, die Codierung als Durchbrüche in Wandungen der Gegenstände auszuführen. Die Figuren 15 und 16 zeigen eine Vorrichtung zur Erkennung von Flaschenkästen 75, welche auf einer Rollenbahn 76 in das Blickfeld einer schräggestellten Kamera 77 geführt werden. Die Kamera blickt durch die als Durchbrüche ausgeführte Codierung 78 auf eine beleuchtete oder selbstleuchtende Fläche 79. Die durch die Schrägstellung der Kamera 77 entstandene Verzerrung der Codierung kann ohne weiteres durch entsprechende Programmierung des Bildverarbeitungsrechners 14 (Fig. 1) ausgeglichen werden.

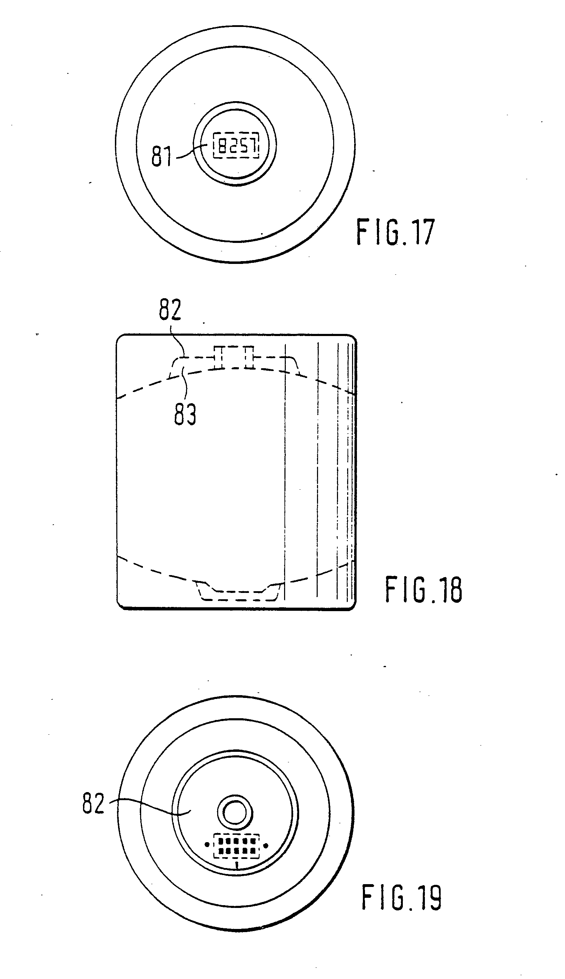

Die Figuren 17 bis 19 zeigen verschiedene Möglichkeiten der Anordnung der Codierung auf einem Ganzmetall-Keg. Während bei der Anordnung nach Fig. 17 die Codierung auf einer in der Mitte der Unterseite angeordneten runden Fläche 81 vorgesehen ist, wird gemäß Fig. 18 und 19, welche jeweils die gleiche Anordnung in zwei verschiedenen Ansichten darstellen, eine Metallronde 82 um die Einfüllmuffe herum auf die Oberseite der Kegblase 84 geschweißt. Die Ronde wird vorteilhafterweise ebenfalls mit der Einfüllmuffe verschweißt, so daß sich zwischen Kegblase und Ronde ein geschlossener Zwischenraum 83 ergibt. In der Oberseite der Ronde, die vorteilhafterweise eben und waagerecht ausgeführt ist, werden Codezeichen und Orientierungszeichen mittels eines Stanzvorganges eingebracht. Für den nötigen Kontrast sorgt eine Kunststoff-Ausschäumung des Raumes zwischen Blase und Ronde, vorzugsweise mit schwarzem Polyurethan, so daß sich die eingestanzten Zeichen dunkel gegen die helle Metalloberfläche der Ronde abheben.

Anstelle der Ronde können auch rechteckige Plaketten oder Blechformteile verwendet werden, welche auf einem definierten, gedachten Kreisring um die Kegrollachse angeordnet sind und zwar derart, daß die Längsseiten der Plakette bzw. des Formteils tangential zu gedachten Kreisringen um die Kegrollachse verlaufen.

Da die Oberfläche der Kegblase zweidimensional gekrümmt ist, sind zur Anpassung und Befestigung der Plakette bzw. des Kastens drei Methoden anwendbar:

1. Die Plakette wird ebenfalls — beispielsweise durch einen Pressvorgang vor oder nach der Codierung — zweidimensional verformt, und paßt sich der Oberfläche des Kegs an. Dann müssen die resultierenden perspektivischen Verzerrungen des Plakettenbildes unter Umständen vom Bildverarbeitungsrechner ausgeglichen werden.

2. Die Anpassung der Plakette geschieht durch eine dicke Kleber- oder Kunststoffschicht und die Plakettenoberfläche bleibt eben. Vorzugsweise wird die Plakette somit kleber- oder kunststoffunterfüttert, daß ihre Oberfläche waagerecht liegt.

3. Das Blechformteil ist als unten offener Blechkasten ausgeformt, wobei die Seitenwände an ihren freien Unterkanten so gestaltet sind, daß sie sich der Kegoberfläche anpassen und daß sie mit ihr verschweißt werden können. Die Kastenoberseite, welche die Codeinformation trägt, sollte waagerecht zu liegen kommen. Der Kasten kann entsprechend der in den Figuren 18 und 19 dargestellten Ronde ausgeschäumt werden.

Zur nachträglichen Anbringung ist es vorteilhafter, daß das Blechformteil mit einer gabelförmigen Verlängerung versehen ist, die sich um die Muffe legt und mit ihr verschweißt wird.

Eine weitere vorteilhafte Anwendung des erfindungsgemäßen Verfahrens ergibt sich in Zusammenhang mit der Codierung von kunststoff-ummantelten Gegenständen wie den bekannten polyurethanumschäumten Bierfässern oder Kegs.

Die segmentierte Ausführung der Codezeichen und der Orientierungszeichen gestattet es, die Zeichen als Balken oder Zylinder mit einigen Millimeter Höhe in Form von geometrischen Inselbereichen in den PU-Mantel einzubetten, so daß sie von Kunststoff umgeben sind und ihre Oberfläche mit dem Kegmantel eine ebene Fläche bildet. Auf diese Weise wird eine nur schwer lösbare Einheit von Gegenstand und Codierung erreicht. Zugleich können die Segmente leicht z. B. mittels eines Handhabeautomaten programmgesteuert in das PU eingebracht werden.

Für das Einbringen der Segmente in eine Plakette ist bereits eine Methode bekannt, bei der die Plakette als weißes Spritzgußteil ausgeführt ist, und bei der die Ziffernsegmente im Urzustand alle anwesend sind, jedoch mit Sollbruchstellen versehen sind. Ein programmgesteuerter Ausstoßer entfernt dann die jeweils nicht gewünschten Segmente, um eine bestimmte Ziffer zu erzeugen. Die erfindungsgemäßen Orientierungszeichen sind ebenfalls fest auf der Plakette angebracht. Beim Umschäumen des Kegs wird die Plakette mit eingeschäumt, wobei die nicht entfernten Segmente und die Orientierungszeichen mit der Faßoberfläche eine ebene Oberfläche bilden. Die Stellen, an denen Segmente entfernt wurden, werden vom PU-Schaum überdeckt.

Die für das erfindungsgemäße Verfahren notwendigen Codezeichen und Orientierungszeichen können auch durch Einbringung der Zeichen in eine besonders geformte Plakette beispielsweise mittels eines Stanzvorganges und die Einschäumung der Plakette in den PU-Mantel an solchem Kegs befestigt werden.

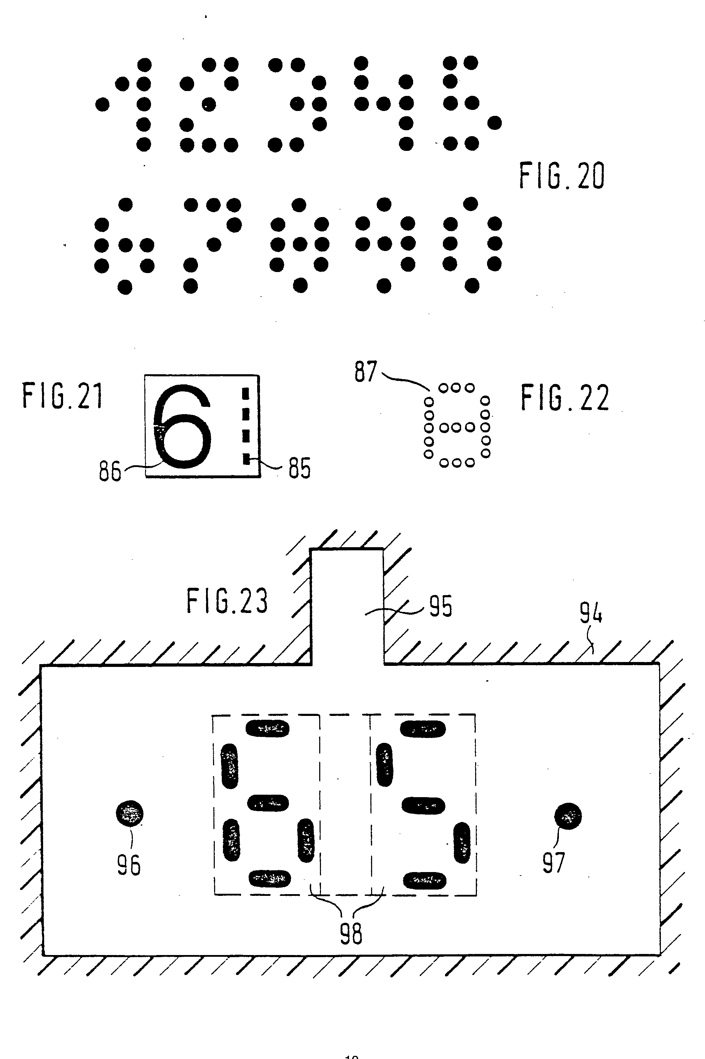

Die folgende Erläuterung bezieht sich auf Fig. 23. Hierbei wird eine Metall- oder Kunststoffplakette 94 verwendet, die aus einer ebenen Platte des betreffenden Materials ausgestanzt werden kann oder als Formteil ausgeführt ist.

Die Plakette hat die Form eines Rechtecks oder Ovals, das an einer Seite ein Drehlagen-Orientierungszeichen in Form einer rechteckigen Ausbuchtung 95 besitzt.

Die Fein-Orientierungszeichen 96, 97 sowie die Ziffernsegmente 98 werden beispielsweise in einem abtragenden Verfahren, z. B. durch Stanzen erzeugt, so daß sie als Löcher in der Plakette 94 erscheinen. Bei der Umschäumung des Fasses wird die Plakette so mit eingeschäumt, daß sie mit der Oberfläche des geschäumten Kunststoffes eine ebene und glatte Fläche bildet, und daß die in die Plakette 94 eingebrachten Löcher 96, 97, 98 mit dem geschäumten Kunststoff ausgefüllt sind. Hierzu wird die Plakette in eine positionierende Aufnahme der Schäumform vor dem Schäumprozeß eingelegt. Sie kann jedoch auch bereits beim Metallverarbeitungsprozeß der Faßherstellung als MetallFormteil z. B. auf die Metalloberfläche aufgeschweißt sein, so daß sich eine bessere Verankerung mit dem Faß selbst ergibt.

Zur Erzeugung eines höchstmöglichen Kontrastes ist die Plakette 94 z. B. in weißem Kunststoff oder in poliertem Edelstahl ausgeführt, wenn die Kunststoffummantelung des Gegenstandes — wie bei ummantelten Kegs üblich — dunkelbraun oder schwarz ist (in Fig. 23 schraffiert dargestellt).

Eine Besonderheit für die Bildverarbeitung ergibt sich, wenn mehrere der beschriebenen Kennzeichnungen bei den Fässern einer Brauerei verwendet werden und ein Lesegerät alle vorkommenden Arten der Kennzeichnungen auswerten soll.

Die geometrische Ausbildung und Zuordnung der Orientierungszeichen und Codezeichen und die Zahl und Geometrie der Codezeichen werden dabei als identisch vorausgesetzt.

Dann sind von der Art des Erscheinungsbildes zu unterscheiden :

Fall A :

Alle Zeichen erscheinen hell vor dunklem Untergrund (z. B. weiße Zeichen aus Kunststoff im schwarz umschäumten Faß).

Fall B :

Alle Zeichen erscheinen dunkel vor hellem Hintergrund (z. B. Stanzen der Zeichen in eine hell erscheinende Metallronde mit anschließender Unterschäumung der Ronde mit schwarzem PU).

Fall C :

Das Drehlagen-Orientierungszeichen erscheint hell, die anderen Zeichen erscheinen dunkel vor jeweils konträrem Untergrund (Ausführung gemäß Fig. 23).

Es ist weiterhin möglich, daß vor der erfindungsgemäßen Code-Erkennung der Bildverarbeitungsrechner eine kreisscheibenförmige Maske bildet, welche die Faßoberfläche möglichst großflächig überdeckt. Innerhalb der Maske wird die Summe der weißen Bildpunkte im Binärbild oder die Grauwertsumme gebildet und daraus die Information abgeleitet, ob es sich um ein Metallkeg oder um ein umschäumtes Keg handelt.

Handelt es sich um ein Metallkeg, so werden die folgenden Bildverarbeitungsvorgänge in invertierten Binärbildern durchgeführt, in denen alle hellen Bildstellen als dunkel und alle dunklen Bildstellen als hell dargestellt werden.

Dadurch wird eine unterschiedslose Verwendung der bereits beschriebenen Algorithmen auch bei dunklen Zeichen vor hellem Hintergrund ermöglicht.

Handelt es sich um ein (schwarz) umschäumtes Keg, so wird die Drehlagen-Erkennung im nichtinvertierten Binärbild durchgeführt.

Nach der Ermittlung der Drehlage gemäß den beschriebenen Abläufen bildet der Bildverarbeitungsrechner eine Maske, die das gesamte Codefeld umfaßt, und errechnet die Summe der weißen Bildpunkte im Binärbild oder die Grauwertsumme.

Mittels der erhaltenen Werte können Fall A und C unterschieden werden, da je nach Hintergrund-Helligkeit erhebliche Differenzen vorliegen werden.

Wird der Fall C registriert, so wird das Binärbild invertiert. Im Fall A wird das Binärbild nicht invertiert. Danach werden die bereits beschriebenen Abläufe durchgeführt.

Die am Beispiel eines Kegs und eines Flaschenkastens erläuterten Anordnungen für eine Codierung sind auch für andere Transportmittel und Werkstücke geeignet. So können beispielsweise Autokarosserien an einer später nicht sichtbaren Stelle mit einer solchen Kennzeichnung in Form von einer gelochten Metallplakette versehen werden und die Fertigungsstraße einschließlich der Lackierstationen durchlaufen. Dabei wird auch nach einer Lackierung der Lack die von den Zeichen gebildeten Löcher nicht ganz verdecken, so daß die Codierung auch dann, z. B. im Gegenlicht lesbar bleibt. Zum Unterschied zu bekannten Lochcodierungen ist mit der erfindungsgemäßen Codierung auch eine Lesbarkeit durch den Menschen gewährleistet.

Die Figuren 20 bis 22 zeigen weitere vorteilhafte Gestaltungen der Codierungen. So ist beispielsweise in Fig. 20 eine Codierung der Schriftzeichen nach einer 3x5-Punktmatrix dargestellt. Diese Darstellung kann beispielsweise vorteilhaft zur Codierung von elektronischen Leiterplatten verwendet werden. Dazu werden die entsprechenden Punkte als Löcher in die Leiterplatten gebohrt und können im Gegenlicht sowohl von einem Menschen als auch von einer Kamera mit einem Bildverarbeitungsrechner gelesen werden. Gegenüber den bekannten Lochcodes für Leiterplatten wird eine etwas größere Fläche benötigt. Die Codierung bietet jedoch den Vorteil, daß alle Buchstaben des Alphabets darstellbar sind.

Die Leiterplatte wird vorzugsweise in der Leseeinrichtung mit einer ihrer Kanten an einer Bezugskante geführt. Die Kamera detektiert die Codelöcher im Gegenlicht, wobei unterhalb der Leiterplatte eine Leuchtfläche angeordnet ist. Die Kamera ist mit einem Teleobjektiv versehen und in einigem Abstand angeordnet, um die optische Einschnürung der Codepunkte auf Grund der perspektivischen Ovalisierung der Kreislöcher am Bildfeldrand gering zu halten. Die Leiterplatte kann auch in einem telezentrischen Strahlengang angeordnet sein. Ist die Kante der Leiterplatte nicht mit dem Bohrraster parallel, so kann die Drehlage der Leiterplatte an Hand der gebräuchlicherweise eingearbeiteten Zentrierlöcher mittels bekannter Bildverarbeitungsmethoden grob bestimmt werden. Zur Bestimmung der Lage des Codierfeldes in Abszissen- und Ordinatenrichtung dienen je ein Bohrloch oder je eine Bohrreihe am Anfang und Ende des Codefeldes, die um etwa ein Zeichen vom Codefeld abgesetzt sind.

Ein Beispiel für eine Markierung mit menschenlesbaren Zeichen und speziellen für das automatische Erkennen vorgesehenen Zeichen gemeinsam auf einem Prägestock, z. B. für das Erzeugen von Schlagzahlen ist in Fig. 21 dargestellt. Bei der Erkennung derartiger Zeichen mit Hilfe des erfindungsgemäßen Verfahrens wird die Maske, welche die einzelnen Segmente abtastet, lediglich an den Positionen der maschinenlesbaren Codierung 85 und nicht im Bereich des menschenlesbaren Zeichens 86 erzeugt. Schließlich ist in Fig. 22 noch ein Beispiel für die Darstellung eines Zeichens 87 mit Hilfe einer 5x7 Punktmatrix dargestellt.

Neben den erfindungsgemäßen Codierungen können zusätzliche Grauwert-Bestimmungszeichen im Codefeld-Bereich angebracht sein. Die Grauwert-Bestimmungsabzeichen dienen dazu, bei schwankenden Druckqualitäten der Zeichen, geringem Kontrast sowie unterschiedlichen Beleuchtungsstärken eine optimale Schwelle für die Videosignal-Binärisierung zu finden.

Dies ist vor allem erforderlich bei kritischen Druckverfahren, die nur wenig Kontrast zum Untergrund erzeugen, wie z. B. Ätzung der Zeichen auf metallischen Oberflächen oder Laser-Druck auf Metall oder Farbspritzbeschriftung von porösen Oberflächen. Aber auch wenn der Untergrund usw. variieren kann, ist die Anwendung des im folgenden dargestellten Verfahrens zu einer sicheren Zeichenerkennung vorteilhaft.

Hierbei wird an einem festgelegten Ort in unmittelbarer Nähe der Codezeichen ein z. B. rechteckiger oder kreisscheibenförmiger Bereich mit dem gleichen Verfahren wie die sonstigen Zeichen und vorteilhafterweise gleichzeitig mit diesen lückenlos beschriftet.

An einer anderen festgelegten Stelle in unmittelbarer Nähe der Codezeichen wird ein gleich großer und geometrisch gleicher Bereich — im folgenden « Leerzeichen » genannt — von jeglicher Beschriftung freigehalten, so daß er die Oberflächenqualität des unbeschrifteten Codefeld-Untergrundes repräsentiert.

Das Grauwert-Bestimmungszeichen und das Leerzeichen nehmen vorteilhafterweise die Größe eines Codezeichen-Platzes ein oder sind noch größer.

Nachdem die Lageerkennung des Codefeldes mit Hilfe des erfindungsgemäßen Verfahrens — und zwar auf der Grundlage der Binärisierungsschwelle der jeweils vorhergehenden Codelesung — abgeschlossen ist, ist eine zumindest grobe Lagebestimmung des Grauwert-Bestimmungszeichens und des Leerzeichens möglich.

Nun werden innerhalb der beiden Zeichen mittig kreisscheibenförmige oder rechteckige Masken gelegt, die im Verhältnis zu den Zeichen so klein sind, daß sie auch bei Ungenauigkeiten der vorangegangenen Lageerfassung stets voll von den Zeichenkonturen umgeben sind und diese nicht überlappen.

Innerhalb der Masken wird nun im Baustein 6 die Grauwertsumme der Pixel gebildet.

In Abhängigkeit von den ermittelten beiden Grauwertsummen — wobei die eine den Grauwert der bedruckten und die andere den Grauwert der unbedruckten Stellen des Codefeldes wiedergibt — wird dann eine Anpassung der Binärisierungsschwelle derart vorgenommen, daß die Schwelle etwa in die Mitte der beiden ermittelten Grauwerte gelegt wird.

Mit dieser angepaßten Schwelle kann dann die Lageerkennung anhand der Orientierungszeichen wiederholt werden, was in der Regel zu einer höheren Genauigkeit führen wird, und die Codezeichen nach dem erfindungsgemäßen Verfahren abgetastet werden.

Bei bestimmten Beschriftungsverfahren, wie z. B. dem Ätzen auf Metall sind sogar große Unterschiede in dem Kontrast von Zeichen zu Zeichen möglich. Deshalb ist hierfür eine Kontrastbestimmung bei jedem einzelnen Zeichen erforderlich. In der Regel ist dabei die Position der Zeichen nicht variant, so daß keine Lageerkennung vorgenommen werden muß. Weiterhin weist der Untergrund einen stets gleichen Helligkeitswert auf.

Für diese und ähnliche Anwendungen ist die Anbringung eines Grauwert-Bestimmungszeichens unmittelbar neben oder oberhalb oder unterhalb jeden Zeichens sinnvoll. Dabei kann das Grauwert-Bestimmungszeichen relativ klein sein und sogar von der Maske für die Grauwert-Bestimmung überlappt werden, da der Grauwert des Untergrundes definiert ist und nach der Grauwert-Summenbildung rechnerisch abgezogen werden kann. Bei dieser Anordnung muß jedoch gewährleistet sein, daß die Fläche des Grauwert-Bestimmungszeichens — und nur diese — voll von der Maske erfaßt wird.

## Patentansprüche

1. Verfahren zum Erkennen von Gegenständen, insbesondere Dokumenten, Werkstücken und Transportmitteln mit folgenden Merkmalen :.

a) auf dem Gegenstand ist eine dauerhafte Codierung (16, 23) angebracht, die aus segmentierten Klarschriftzeichen (30-36) besteht, welche sowohl menschen- als auch maschinenlesbar sind,

b) auf dem Gegenstand sind ferner Orientierungszeichen (24, 25) angebracht, welche zur Codierung (16, 23) eine vorgegebene Lage aufweisen,

c) der Gegenstand wird bezüglich einer elektronischen Kamera (1) in eine bestimmte Soll-Lage gebracht, in der die Kamera (1) den Gegenstand bzw. bestimmte Teile davon aufnehmen kann,

d) die Codierung (16, 23) und die Orientierungszeichen (24, 25) werden von einer elektronischen Kamera (1) aufgenommen, deren Ausgangssignale zu einem Bildverarbeitungsrechner (14) geleitet werden,

e) Abtastmasken (30, 31) nehmen innerhalb des aufgenommenen Bildes die voraussichtliche Lage der Orientierungszeichen (24, 25) ein, wobei die Fläche der Abtastmasken (30, 31) über diejenige der Orientierungszeichen (24, 25) hinausgeht,

f) diejenigen Zeichen (24, 25), welche sich in den Masken (30, 31) befinden, werden als Orientierungszeichen erkannt und deren Koordinaten errechnet,

g) aus den Koordinaten der Orientierungszeichen werden die Koordinaten weiterer Masken (44) für die einzelnen Segmente (43) der Codierung errechnet,

h) aus der An- oder Abwesenheit der Segmente innerhalb der weiteren Maske (44) wird eine Code-Information abgeleitet.

2. Verfahren nach Anspruch 1, dadurch gekennzeichnet, daß zur Erkennung von rotationssymmetrischen Gegenständen vor der Erzeugung der Masken (30, 31) für die Orientierungszeichen (24, 25) eine kreisringförmige Maske (27) für ein Drehlagenzeichen (26) des Gegenstandes erzeugt wird, deren Mittelpunkt (21) auf dem vermuteten Mittelpunkt des Gegenstandes liegt und aus der Lage des Drehlagenzeichens (26) bezüglich des Mittelpunkts (21) die Groblage der Codierung (23) bzw. der Orientierungszeichen (24, 25) ermittelt wird.

3. Verfahren nach Anspruch 2, dadurch gekennzeichnet, daß vor der Erzeugung der Maske (27) für das Drehlagenzeichen (26) eine Maske für den auf dem Gegenstand gekennzeichneten Mittelpunkt (21) erzeugt wird und den so bestimmten Mittelpunkt (21) als Mittelpunkt der kreisringförmigen Maske (27) gemäß Anspruch 2 benutzt.

4. Verfahren nach Anspruch 1, dadurch gekennzeichnet, daß vor der Erzeugung der Masken (30, 31) für die Orientierungszeichen (24, 25) der Flächenschwerpunkt des die Codierung umfassenden Codefeldes (23) ermittelt wird und unter Zuhilfenahme der Koordinaten des Flächenschwerpunktes die Koordinaten der Maske (30, 31) für die Orientierungszeichen (24, 25) errechnet wird.

5. Verfahren nach Anspruch 4, dadurch gekennzeichnet, daß mehrere Orientierungszeichen (59, 61) mit unterschiedlichen Abständen vom Flächenschwerpunkt (62) angeordnet sind und daß mehrere Masken (58, 60) für die Orientierungszeichen (59, 61) mit unterschiedlichem Abstand vom Flächenschwerpunkt (62) erzeugt werden, wobei mindestens eine erste Maske (63) kreisringförmig und konzentrisch zum Flächenschwerpunkt (62) ist.

6. Anordnung zur Kennzeichnung von Gegenständen zur Verwendung in einem Verfahren gemäß einem der Ansprüche 1-5, wobei auf dem Gegenstand eine dauerhafte Codierung (98) angebracht ist, die aus segmentierten Klarschriftzeichen (30-36) besteht, welche sowohl menschen- als auch maschinenlesbar sind, und auf dem Gegenstand ferner Orientierungszeichen (96, 97) angebracht sind, welche zur Codierung (98) eine vorgegebene Lage aufweisen, dadurch gekennzeichnet, daß die Codierung (98) und die Orientierungszeichen (96, 97) als Löcher in einer Plakette (94) aus zum Material des Gegenstandes kontrastierenden Material vorliegen, daß die Plakette (94) eine Ausbuchtung (95) als weiteres Orientierungszeichen (Grob-Orientierungszeichen, Drehlage-Orientierungszeichen) aufweist und daß die Plakette (94) in die Oberfläche des Gegenstandes eingebettet ist.

**Claims**

1. Method for the identification of objects, especially documents, work pieces and transport means, with the following characteristics :

a) to the object is applied a durable coding (16, 23) which consists of segmented character symbols (30-36) which are not only human but also machine readable,

b) to the object are further applied orientation symbols (24, 25) which have a given position to the coding (16, 23),

c) the object is brought, with regard to an electronic camera (1), into a particular desired position in which the camera (1) can scan the object or certain parts thereof,

d) the coding (16, 23) and the orientation symbols (24, 25) are scanned by an electronic camera (1), the output signals of which are passed to an image processing computer (14),

e) scanning masks (30, 31) assume, within the scanned image, the anticipated position of the orientation symbols (24, 25), whereby the surface of the scanning masks (30, 31) project over that of the orientation symbols (24, 25),

f) those symbols (24, 25) which are present in the masks (30, 31) are identified as orientation symbols and their coordinates calculated,

g) from the coordinates of the orientation symbols are calculated further masks (44) for the individual segments (43) of the coding,

h) from the presence or absence of the segments within the further masks (44) is derived a code information.

2. Method according to claim 1, characterised in that, for the identification of rotation-symmetrical objects, before the production of the masks (30, 31) for the orientation symbols (24, 25), a circular ringshaped mask (27) is produced for a rotational position symbol (26) of the object, the middle point (21) of which lies on the assumed middle point of the object and, from the position of the rotational position symbol (26) with regard to the middle point (21), the rough position of the coding (23) or of the orientation symbols (24, 25) is determined.

3. Method according to claim 2, characterised in that, before the production of the mask (27) for the rotational position (26), a mask is produced for the middle point (21) characterised on the object and the so determined middle point (21) is used as middle point of the circular ring-shaped mask (27) according to claim 2.

4. Method according to claim 1, characterised in that, before the production of the masks (30, 31) for the orientation symbols (24, 25), the surface centre of gravity of the code field (23) encompassing the coding is determined and, with the help of the coordinates of the surface centre of gravity, the coordinates of the mask (30, 31) for the orientation symbol (24, 25) is calculated.

5. Method according to claim 4, characterised in that several orientation symbols (59, 61) are arranged with different distances from the surface centre of gravity (62) and that several masks (58, 60) for the orientation symbols (59, 61) are produced with different distance from the surface centre of gravity (62), whereby at least a first mask (63) is circular shaped and concentric to the surface centre of gravity (62).

6. Arrangement for the labelling of objects for the use in a method according to one of claims 1-5, whereby a durable coding (98) is applied to the object which consists of segmented character symbols (30-36) which are not only human but also machine readable and on the object are further applied orientation symbols (96, 97) which have a predetermined position to the coding (98), characterised in that the coding (98) and the orientation symbols (96, 97) are present as holes in a tag (94) of material contrasting to the material of the object, that the tag (94) has a bulge (95) as further orientation symbol (rough orientation symbol, rotational position orientation symbol) and that the tag (94) is embedded in the surface of the object.

**Revendications**

1. Procédé de reconnaissance d'objets, en particulier de documents de pièces d'usinage et de moyens de transport présentant les caractéristiques suivantes :

a) sur l'objet est appliqué un codage durable (16, 23), qui consiste en caractères en clair segmentés (30-36), qui sont lisibles tant par l'homme que par la machine,

b) sur l'objet sont appliqués, en outre, des repères d'orientation (24, 25) qui présentent une position prédéterminée destinée au codage (16, 23),

c) l'objet est amené, par rapport à une caméra électronique (1), dans une certaine position prescrite, dans laquelle la caméra (1) peut capter l'objet ou respectivement des parties déterminées de celui-ci,

d) le codage (16, 23) et les repères d'orientation (24, 25) sont captés par une caméra électronique (1), dont les signaux de sortie sont amenés à un ordinateur à traitement d'images (14),

e) des masques de lecture (30, 31) occupent la position prévisible des repères d'orientation (24, 25) à l'intérieur de l'image captée, la surface des masques de lecture (30, 31) dépassant celle dès repères d'orientation (24, 25),

f) les repères (24, 25) qui se trouvent dans les masques (30, 31), sont reconnus en qualité de repères d'orientation et leurs coordonnées sont calculés,

g) les coordonnées d'autres masques (44) destinées aux différents segments (43) du codage sont calculées à partir des coordonnées des repères d'orientation,

h) une information codée est dérivée de la présence ou de l'absence des segments à l'intérieur des autres masques (44).

2. Procédé suivant la revendication 1, caractérisé en ce que, pour la reconnaissance d'objets à symétrie de révolution un masque en forme d'anneau de cercle (27) destiné à une marque de position angulaire (26) de l'objet est engendré avant d'engendrer les masques (30, 31) destinés aux repères l'orientation (24, 25), ledit masque (27), ayant son centre (21) au centre présumé de l'objet et la position approximative du codage (23) ou respectivement des repères d'orientation (24, 25) étant déterminée à partir de la position de la marque de position angulaire (26) par rapport au centre (21).

3. Procédé suivant la revendication 2, caractérisé en ce que, avant d'engendrer le masque (27) destiné à la marque de position angulaire (26), un masque destiné au centre (21) matérialisé sur l'objet est engendré et en ce que le centre ainsi déterminé (21) utilise comme centre le masque en forme d'anneau de cercle (27) suivant la revendication 2.

4. Procédé suivant la revendication 1, caractérisé en ce que, avant d'engendrer les masques (30, 31) destinés aux repères d'orientation (24, 25), le centre de gravité de surface de la zone de codage (23) qui entoure le codage est déterminé et en ce que les coordonnées des masques (30, 31) destinés aux repères d'orientation (24, 25) sont calculés à l'aide des coordonnées du centre de gravité de surface.

5. Procédé suivant la revendication 4, caractérisé en ce que plusieurs repères d'orientation (59, 61) sont agencés à des distances différentes du centre de gravité de surface (62) et en ce que plusieurs masques (58, 60) destinés aux repères d'orientation (59, 61) sont engendrés à des distances différentes du centre de gravité de surface (62) et en ce que plusieurs masques (58, 60) destinés aux repères d'orientation (59, 61) sont engendrés à des distances différentes du centre de gravité de surface (62), au moins un premier masque (63) étant en forme d'anneau de cercle et concentrique au centre de gravité de surface (62).

6. Dispositif de caractérisation d'objets mis en œuvre dans un procédé suivant l'une des revendications 1 à 5, dans lequel sur l'objet est appliqué un codage durable (98), qui consiste en caractères en clair segmentés (30-36), qui sont lisibles tant par l'homme que par la machine et dans lequel sont, en outre, appliqués sur l'objet des repères d'orientation (96, 97) qui présentent une position prédéterminée pour le codage (98), caractérisé en ce que le codage (98) et les repères d'orientation (96, 97) se présentent sous la forme de trous dans une plaquette (94) à base d'une matière contrastant avec celle de l'objet, en ce que la plaquette (94) présente une saillie (95) comme autre repère d'orientation (repère d'orientation grossier, repère d'orientation pour la position angulaire) et en ce que la plaquette (94) est noyée dans la surface de l'objet.

**FIG.1**

4 — Adress-Daten-und Steuerbus

5 — Video-Bus

8 — Prozessor-Karte mit Schnittstelle

9 — Bildspeicher mit Boolschem Operator

7 — Bildverarb.-Einheit mit
*Flächenmessung
*Schwerpunkt-Bestimmung
*Kanten-Dedektion
*Masken-Generierung

6 — Echtzeit-Grauwert-Analyzer mit Masken-Generator

2 — Kamera-Interface mit steuerbarer Binärisierungs-schwelle

3

1

FIG.2

FIG.3

2

FIG.4

FIG.5

45

41

45

44

42

43

FIG.6

FIG.7

FIG.8

FIG.9

FIG.10

1

64

66

65

FIG.11

67

65

69    68    69    69

FIG.12

FIG.13

FIG.14

FIG.15

FIG.16

FIG.17

FIG.18

FIG.19

FIG.20

FIG.21

86  85

87  FIG.22

FIG.23

95  94

96  97

98